Europäisches Patentamt

European Patent Office

Office européen des brevets

(19)

(11) Publication number: **0 068 723**
**B1**

(12) **EUROPEAN PATENT SPECIFICATION**

(45) Date of publication of patent specification: **02.09.87**

(51) Int. Cl.⁴: **G 05 G 5/06**

(21) Application number: **82303127.3**

(22) Date of filing: **16.06.82**

(54) **Hand control valve.**

(30) Priority: **01.07.81 GB 8120343**

(43) Date of publication of application:
**05.01.83 Bulletin 83/01**

(45) Publication of the grant of the patent:
**02.09.87 Bulletin 87/36**

(84) Designated Contracting States:
**DE FR GB**

(56) References cited:
**DE-A-2 251 663**
**FR-A-2 201 408**
**GB-A-1 097 400**

(73) Proprietor: **CLAYTON DEWANDRE COMPANY LIMITED**
**P.O. Box 9 Titanic Works**
**Lincoln, LN5 7JL (GB)**

(72) Inventor: **Coupland, Ralph**
**61 Rookery Lane**
**Lincoln (GB)**

(74) Representative: **Hartley, David et al**
**c/o Withers & Rogers 4 Dyer's Buildings Holborn**
**London, EC1N 2JT (GB)**

Courier Press, Leamington Spa, England.

## Description

This invention relates to a lever locking mechanism particularly but not exclusively for a hand control valve such as used for vehicle braking systems.

Hand control valves such as disclosed in DE—A—2 251 663, normally have an operating lever which is automatically locked into a "parked" position by means of a movable locking member which is biased toward a locked position wherein it engages an abutment disposed in a position corresponding to the park position of the lever. Usually, the locking member is in the form of a sleeve disposed around and slidable along the lever and is biased by an internal spring so as to enter an enlarged circular opening at the end of the lever guide slot corresponding to the park position. To release the lever, whereupon it is returned to the "brakes-off" position by a torsion spring, the sleeve must be withdrawn from the circular opening in opposition to the action of the internal spring. This arrangement is not sufficiently secure to comply with the safety regulations in force in certain countries.

What we propose in accordance with the present invention is a lockable lever mechanism comprising a lever movable along a guide, a locking member slidably disposed on the lever, a biasing member also disposed on said lever and biasing said locking member in a first direction so as to enter a recess provided at a predetermined locking position in the guide, thereby preventing movement of the lever, and means biasing the locking member into ·frictional contact with an abutment of said recess when in engagement therewith characterised in that the biasing member is disposed in releasable engagement with the locking member and in that the locking member is additionally biased in a direction opposite to said first direction with a biasing force less than the friction force acting in the locking position between the locking member and the abutment of the recess.

In a preferred embodiment a lower sleeve, which in the locked position enters an enlarged opening in a guide slot for the lever to prevent movement of the lever, is biased upwardly away from the locking position and an upper sleeve is biased downwardly tending to hold the lower sleeve in the locked position. With such a mechanism in an otherwise conventional hand control valve of the kind described above, locking is maintained, but when the upper sleeve is pulled up, the lower sleeve remains in the locked position, being held by friction acting between the sleeve and the edge of the circular opening. Only when the lever is pulled back against the torsion spring, is the lower sleeve ejected from the opening to release the lever.

One advantage of a locking mechanism according to the present invention is that the lower locking sleeve is subject only to a light locking spring load. The extensive wear associated with the conventional locking mechanism is avoided.

The invention also includes a hand control valve the operating lever of which is fitted with a lockable lever mechanism according to the invention. An embodiment of the invention will now be described with reference to the accompanying drawings in which:

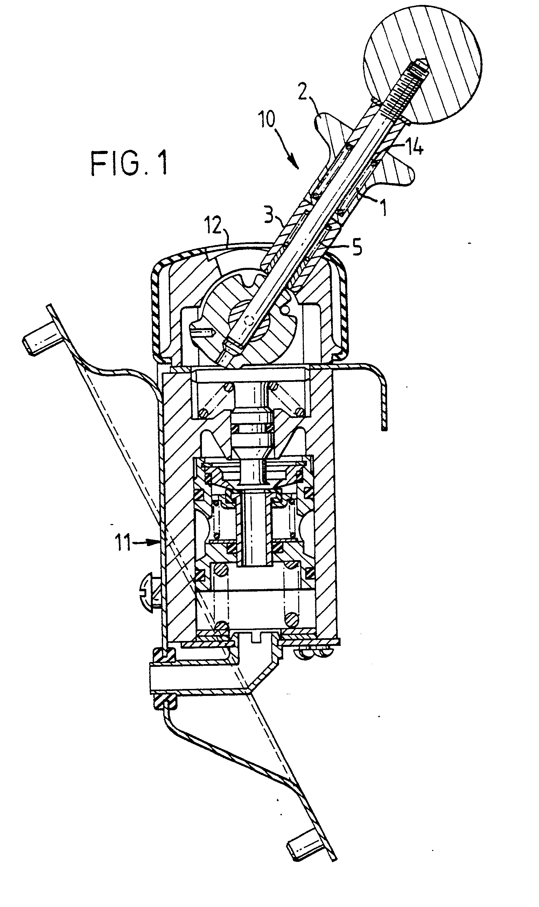

Figure 1 is a cross-sectional view of a hand control valve having a lever fitted with a locking mechanism according to the present invention; and

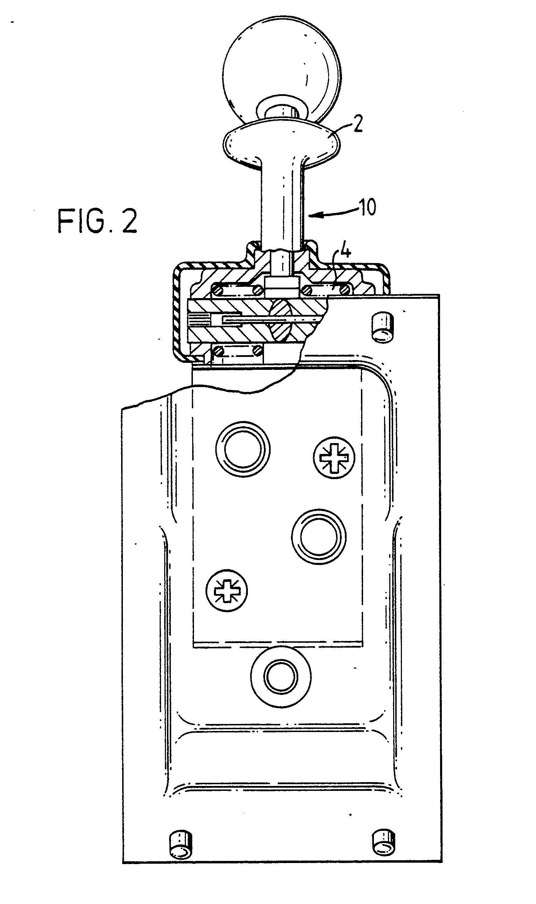

Figure 2 is a part cross-section and elevation of the hand control valve shown in Figure 1.

The lever 10 is movable in an arc, to control the valve 11, through a guide slot 12 having at one end, corresponding to a "park" position, an enlarged circular opening (not shown) of a diameter sufficient to receive a lower sleeve 3 around the lever 10. This sleeve 3 is biased radially outwardly along the lever (i.e. away from the position shown) by a light spring 5 within the sleeve 3. Radially outwardly along the lever 10 is a second sleeve 2 which is biased radially inwardly along the lever (i.e. toward the locking position shown) by a spring 1 disposed between the sleeve 2 and the lever and abutting a shoulder 14 on the lever. The spring 1 is more powerful than the spring 5.

In operation, when the lever 10 is moved to the "park" position both sleeves move together under the action of the spring 1 in opposition to spring 5 such that the lower sleeve 3 enters the enlarged circular opening and thus locks the lever in the "park" position.

Should the operator simply raise the upper sleeve 2 against the spring 1 the lever will not be released since the friction acting between the lower sleeve 3 and the sides of the enlarged opening due to the action of a torsion spring 4 tending to return the lever to the brakes-off position, is not overcome by the spring 5.

To release the lever, the operator must, in addition to raising the upper sleeve 2, also pull back the lever 10 from its locked position, to relieve the pressure applied by the torsion spring 4. This done, the lower sleeve moves outwardly along the lever under the action of the spring 5 so allowing the lever to traverse the guide slot to the "brakes-off" position.

## Claims

1. A lockable lever mechanism comprising a lever (10) movable along a guide (12), a locking member (3) slidably disposed on the lever (10), a biasing member (1, 2) also disposed on said lever and biasing said locking member in a first direction so as to enter a recess provided at a predetermined locking position in the guide, thereby preventing movement of the lever, and means (4) biasing the locking member (3) into frictional contact with an abutment of said recess when in engagement therewith characterised in that the biasing member (1, 2) is disposed in releasable engagement with the locking member (3) and in that the locking member is additionally biased in a direction opposite to said first direction with a biasing force (5) less than the friction force acting in the locking position between the locking member (3) and the abutment of the recess.

2. A mechanism according to claim 1 wherein the locking member comprises a first spring biased sleeve (3) around the lever (10), the abutment comprising the edge of the recess formed in the guide (12) for receiving the sleeve in the locking position so as to prevent movement of the lever.

3. A mechanism according to claim 2 wherein the biasing member comprises a second spring biased sleeve (2) slidably disposed around the lever (10) in such a way that its one end is in abutment with the adjacent end of the locking member (3).

4. A mechanism according to claim 3 wherein the second sleeve (2) is adapted and arranged to be raised by hand against the bias of its spring (1) when operating the lever.

5. A hand control valve for a vehicle braking system including a lockable lever mechanism according to any one of the preceding claims, the lever of which mechanism is arranged to enable control of the valve (11), said means (4) biasing the lever (10) away from a "park" position wherein the locking member (3) takes up the locking position, toward a "brakes-off" position.

## Patentansprüche

1. Arretierbarer Hebelmechanismus mit einem Hebel (10), der längs einer Führung (12) beweglich ist, mit einem Arretierelement (3), das an dem Hebel (10) gleitend verschiebbar angeordnet ist, mit einem Vorspannglied (1, 2), das ebenfalls auf dem Hebel angeordnet ist und das Arretierelement in eine erste Richtung so vorspannt, daß es in eine Aussparung eintritt, die in einer vorgegebenen Arretierstellung in der Führung vorgesehen ist, wodurch eine Bewegung des Hebels verhindert wird, und mit einer Einrichtung (4), die das Arretierelement (3) in Reibungskontakt mit einem Anschlag der Aussparung vorspannt, wenn sie in Eingriff damit steht, dadurch gekennzeichnet, daß das Vorspannglied (1, 2) in lösbarem Eingriff mit dem Arretierelement (3) angeordnet ist, und daß das Arretierelement zusätzlich in eine zu der ersten Richtung entgegengesetzte Richtung mit einer Vorspannkraft (5) vorgespannt ist, die kleiner ist als die Reibungskraft, die in der Arretierstellung zwischen dem Arretierelement (3) und dem Anschlag der Aussparung wirkt.

2. Mechanismus nach Anspruch 1, bei welchem das Arretierelement eine erste, federvorgespannte Hülse (3) um den Hebel (10) herum aufweist, wobei der Anschlag der Rand der in der Führung (12) ausgebildeten Aussparung ist, um die Hülse in der Arretierstellung so aufzunehmen, daß die Bewegung des Hebels verhindert wird.

3. Mechanismus nach Anspruch 2, bei welchem das Vorspannglied eine zweite federvorgespannte Hülse (2) aufweist, die gleitend verschiebbar um den Hebel (10) derart angeordnet ist, daß ihr eines Ende an dem benachbarten Ende des Arretierelementes (3) anliegt.

4. Mechanismus nach Anspruch 3, bei welchem die zweite Hülse (2) dafür ausgelegt und angeordnet ist, daß sie von Hand gegen die Vorspannung ihrer Feder (1) bei Betätigung des Hebels anhebbar ist.

5. Handsteuerventil für ein Fahrzeugbremssystem mit einem arretierbaren Hebelmechanismus nach einem der vorhergehenden Ansprüche, dessen Hebelmechanismus so angeordnet ist, daß eine Steuerung des Ventils (11) möglich ist, wobei die Einrichtung (4) den Hebel (10) aus einer "Park"-Stellung weg vorspannt, während des Arretierelement (3) die Arretierposition zu einer "Bremsen-aus"-Stellung hin übernimmt.

## Revendications

1. Mécanisme à levier verrouillable comprenant un levier (10) mobile le long d'un guide (12), un organe de verrouillage (3) monté coulissant sur le levier (10), un organe (1, 2) de sollicitation également monté sur ledit levier et sollicitant ledit organe de verrouillage dans une première direction de façon à le faire pénétrer dans un logement prévu au niveau d'une position prédéterminée de verrouillage dans le guide, de façon à empêcher un déplacement du levier, et des moyens (4) sollicitant l'organe de verrouillage (3) en contact de frottement avec une butée dudit logement lorsqu'il est en engagement avec elle, caractérisé en ce que l'organe de sollicitation (1, 2) est disposé en engagement séparable avec l'organe de verrouillage (3) et en ce que l'organe de verrouillage est en outre sollicité dans une direction opposée à ladite première direction avec une force de sollicitation (5) inférieure à la force de frottement agissant dans la position de verrouillage entre l'organe de verrouillage (3) et la butée du logement.

2. Mécanisme selon la revendication 1 dans lequel l'organe de verrouillage comprend un manchon (3) entourant le levier (10) sollicité par un premier ressort, la butée comprenant le bord du logement qui est formée dans le guide (12) pour recevoir le manchon dans la position de verrouillage de façon à empêcher le déplacement du levier.

3. Mécanisme selon la revendication 2 dans lequel l'organe de sollicitation comprend un second ressort sollicitant le manchon (2) disposé en coulissement autour du levier (10) de telle façon que son extrémité vient en butée avec l'extrémité adjacente de l'organe de verrouillage (3).

4. Mécanisme selon la revendication 3 dans lequel le second manchon (2) est disposé et conçu de manière à être soulevé manuellement à l'encontre de l'action de son ressort (1) lorsqu'on actionne le levier.

5. Valve à commande manuelle pour un système de freinage de véhicule comprenant un mécanisme à levier verrouillable selon l'une quelconque des revendications précédentes, le levier du mécanisme étant disposé de façon à permettre la commande de la valve (11), lesdits moyens (4) sollicitant le levier (10) en éloignement de la position de "parking" dans laquelle l'organe de verrouillage (3) occupe la position de verrouillage, en direction d'une position de relâchement des freins.

FIG. 1

FIG. 2